# EUROPÄISCHE PATENTSCHRIFT

(11) **EP 2 571 816 B1**
(45) Veröffentlichungstag und Bekanntmachung des Hinweises auf die Patenterteilung: **30.04.2014**
(21) Anmeldenummer: 11720097.2
(22) Anmeldetag: 17.05.2011
(51) Int. Cl.: C02F 1/467, C02F 1/461, C02F 101/38, C02F 103/36, C02F 103/38

(54) **VERFAHREN UND VORRICHTUNG ZUR ENTFERNUNG VON NITROAROMATEN AUS ABWASSER**
METHOD AND DEVICE FOR REMOVING NITROAROMATICS FROM WASTE WATER
PROCÉDÉ ET DISPOSITIF POUR ÉLIMINER DES NITROAROMATES D'EAUX RÉSIDUAIRES

(30) Priorität: 21.05.2010 EP 10163506
(43) Veröffentlichungstag der Anmeldung: 27.03.2013
(73) Patentinhaber: BASF SE, 67056 Ludwigshafen (DE); Verein für Kernverfahrenstechnik und Analytik Rossendorf e.V., 01328 Dresden (DE)
(72) Erfinder: FRITZ, Rüdiger, 02994 Bernsdorf (DE); HAASE, Stefanie, 01900 Bretnig - Hauswalde (DE); ALLARDT, Holger, Schwarzheide (DE); ZÖLLINGER, Michael, 73054 Eislingen (DE); REETZ, Reiner, 01987 Schwarzheide (DE); FRIEDRICH, Hans-Jürgen, 01833 Stolpen (DE)
(74) Vertreter: Jacobi, Markus Alexander
(86) Internationale Anmeldenummer: PCT/EP2011/057939
(87) Internationale Veröffentlichungsnummer: WO 2011/144594

(56) Entgegenhaltungen:
- EP-A1- 1 036 861
- WO-A1-2004/106241
- US-A- 5 919 350

## Beschreibung

Die vorliegende Erfindung betrifft ein Verfahren und eine Vorrichtung zur elektrochemischen Behandlung von aromatischen Nitroverbindungen, insbesondere ein elektrolytisches Verfahren zur Aufbereitung von alkalischem Prozessabwasser, z. B. aus Prozessen der Nitrierung von aromatischen Verbindungen zu Mono-, Di- und Trinitroaromaten. Dabei werden die im Prozessabwasser enthaltenen aromatischen Nitroverbindungen, sowie gegebenenfalls im Abwasser enthaltene Nitrite, durch anodische Oxidation bzw. durch anodisch erzeugte, oxidierende Verbindungen umgesetzt bzw. zerstört. Durch das Verfahren ist insbesondere eine vollständige Oxidation der aromatischen Nitroverbindungen zu Kohlendioxid und Nitrat möglich. Das Verfahren kann auch im technischen Maßstab und industriell betrieben werden.

Aromatische Nitroverbindungen werden üblicherweise durch Nitrierung der entsprechenden aromatischen Verbindungen (z.B. Benzol, Toluol, Xylol, Chlorbenzol) mittels einer Mischung aus konzentrierter Salpetersäure und konzentrierter Schwefelsäure, auch als Nitriersäure bezeichnet, hergestellt. Dabei entsteht eine organische Phase, die das Rohprodukt der Nitrierung enthält, und eine wässrige Phase, die im Wesentlichen Schwefelsäure, Reaktionswasser und durch die Nitriersäure eingetragenes Wasser enthält. Die eingesetzte Salpetersäure wird in der Regel weitgehend bei der Nitrierung verbraucht.

Nach der Trennung der beiden Phasen wird die wässrige, schwefelsäurehaltige Phase je nach Technologie des Nitrierverfahrens direkt oder nach Aufkonzentrierung wieder mit frischer Salpetersäure gemischt und zur Nitrierung eingesetzt. Üblicherweise muss jedoch mindestens ein Teil der Schwefelsäure kontinuierlich oder diskontinuierlich aus dem Gesamtprozess ausgeschleust werden, um eine Aufkonzentrierung von Verunreinigungen, insbesondere metallischer Salze, zu vermeiden (siehe z.B. DE-C 101 43 800).

Das Rohprodukt der Nitrierungsumsetzung von aromatischen Verbindungen (wie Benzol, Toluol, Xylol, Chlorbenzol) zu den entsprechenden Nitroaromaten enthält üblicherweise neben den gewünschten Nitroaromaten (wie Nitrobenzol (NB), Dinitrobenzol (DNB), Mono- und Dinitrotoluol (MNT und DNT), Nitrochlorbenzol (NCB), Nitroxylol) auch geringe Mengen an aromatischen Nitroverbindungen, welche zusätzlich eine oder mehrere Hydroxyl- und/oder Carboxylgruppen aufweisen.

Diese Verbindungen sind unerwünschte Nebenprodukte. Als unerwünschte Nebenprodukte können z.B. Mono-, Di- und Trinitrophenole (im Folgenden auch zusammenfassend Nitrophenole genannt), Mono-, Di- und Trinitrokresole (im Folgenden auch zusammenfassend Nitrokresole genannt), Mono-, Di- und Trinitroxylenole (im Folgenden auch zusammenfassend Nitroxylenole genannt) sowie Mono- und Dinitrobenzoesäuren (im Folgenden zusammenfassend Nitrobenzoesäuren genannt) gebildet werden.

Das Rohprodukt aus der Nitrierung muss vor der Weiterverwendung von den unerwünschten Nebenprodukten befreit werden. Üblicherweise werden die Nebenprodukte - nach Abtrennung der wässrigen Phase (enthaltend Schwefelsäure aus Nitriersäure) - durch mehrstufige Wäsche der organischen Phase mit saurer, alkalischer und neutraler Waschflüssigkeit abgetrennt, wobei in der Regel in der aufgeführten Reihenfolge gewaschen wird. Die alkalische Wäsche wird üblicherweise mit wässriger Natronlauge, wässriger Natriumcarbonatlösung und/oder wässriger Ammoniaklösung durchgeführt.

Das dabei entstehende alkalische Prozessabwasser enthält u. a. auch Nitrophenole, Nitrokresole, Nitroxylenole und Nitrobenzoesäuren in Form ihrer wasserlöslichen Salze der eingesetzten Base. Sie liegen üblicherweise in einer Konzentration von 0,2 bis 2,5 Gew.-%, bezogen auf das alkalische Prozessabwasser vor. Das alkalische Prozessabwasser enthält auch bei der Nitrierung gebildete neutrale Nitrokörper, insbesondere Reaktionsprodukte. Neutrale Nitrokörper können im alkalischen Prozessabwasser üblicherweise in einer Menge von größer 1000 ppm enthalten sein. Das alkalische Prozessabwasser enthält häufig auch 500 bis 5000 ppm Nitrate, 500 bis 5000 ppm Nitrit und größer 100 ppm Sulfat. Diese Ionen stammen überwiegend aus der Nitrierung. Aus den Inhaltsstoffen ergibt sich ein typischer chemischer Sauerstoffbedarf von 1 bis 20 g/L.

Die Nitrophenole, Nitrokresole, Nitroxylenole, Nitrobenzoesäuren, und vor allem ihre Salze, sind intensiv gefärbt und gegebenenfalls stark umwelttoxisch. Zudem haben die Nitrophenole, und speziell ihre Salze, in höheren Konzentrationen oder in Substanz explosive Wirkung und müssen vor Abgabe des Abwassers aus diesem entfernt werden. Sie werden derart entsorgt, dass von ihnen keine Gefahr für die Umwelt ausgeht. Das alkalische Prozessabwasser der aromatischen Nitrierung enthält zudem bei der Nitrierung gebildete neutrale Nitrokörper, insbesondere Reaktionsprodukte. Da die aromatischen Nitroverbindungen auch biozide bzw. bakterizide Eigenschaften aufweisen können, und somit eine biologische Reinigung des Abwassers unmöglich machen, ist eine Reinigung oder Aufarbeitung der aromatische Nitroverbindungen enthaltenden Abwässer notwendig.

Dies ist auch sinnvoll, um die Abwässer einer konventionellen Abwasserbehandlung umfassend eine mikrobiologische Reinigungsstufe zuführen zu können.

Zur Entfernung der Nitrophenole, Nitrokresole, Nitroxylenole, Nitrobenzoesäuren und der neutralen Nitroaromaten aus den Prozessabwässern sind zahlreiche Verfahren in der Literatur beschrieben, beispielsweise Verfahren beruhend auf Extraktion, Adsorption, Oxidation oder Thermolyse.

In der "Encyclopedia of Chemical Technology", Kirk-Othmer, Fourth Edition 1996, Vol. 17, S. 138 wird ein Extraktionsverfahren zur Abtrennung von Nitrobenzol beschrieben, bei welchem das im Abwasser bei der entsprechenden Temperatur gelöste Nitrobenzol durch Extraktion mit Benzol entfernt wird. Benzol, das sich im Wasser gelöst hat, wird vor der Endbehandlung des Abwassers durch Strippen entfernt.

In EP-A 005 203 wird ein thermisches Verfahren zur Aufarbeitung von Hydroxynitroaromaten enthaltenden Abwässern beschrieben. Hierbei werden die Abwässer, die die Hydroxynitroaromaten in Form ihrer wasserlöslichen Salze enthalten, unter Luft- und Sauerstoffausschluss unter Druck auf Temperaturen im Bereich 150 bis 500°C erhitzt.

Die gelösten Nitroaromaten und Hydroxynitroaromaten können weiterhin im sauren Milieu durch Extraktion mit einem organischen Lösungsmittel entfernt werden (siehe Ullmanns Enzyklopädie der technischen Chemie, 4. Auflage, 1974, Band 17, Seite 386).

Weiterhin sind verschiedene Verfahren zur Abtrennung von organischen Nitroverbindungen bekannt, speziell von Nitroaromaten aus Wässern und Abwässern, welche einen chemischen oder elektrochemischen Reduktions- oder Oxidationsschritt und gegebenenfalls einen weiteren physikalischen Trennprozess (wie zum Beispiel eine Extraktion) enthalten.

In DE-A 197 48 229 wird die elektrochemische, kathodische Reduktion von Nitrophenolen und von Nitroresorcinol zu den entsprechenden Aminen an Kohlenstoff-Kathoden beschrieben. EP-A 0 808 920 beschreibt die elektrochemische Reduktion von Nitrobenzol und Nitrophenol an Kathoden aus verschiedenen Materialien. Generell ist an den bekannten Verfahren zur kathodischen Reduktion von nitroaromatischen Verbindungen nachteilig, dass keine vollständige Abtrennung der Nitroaromaten bewirkt wird, bzw. zur Abtrennung der gebildeten gegebenenfalls umweltschädlichen Reaktionsprodukte weitere Verfahrensschritte erforderlich sind.
Darüber hinaus kommt es bei den oben beschriebenen kathodischen Reduktionsverfahren zu einer oftmals starken Schaumbildung im Kathodenraum, weshalb die Verfahren insbesondere im größeren Maßstab technisch schwierig durchzuführen sind. Auch sind eine Reihe oxidativer Verfahren, z.B. nicht-elekrochemische, elektrochemische oder kombinierte, zur Aufbereitung von Nitrierabwässern bzw. zur Abtrennung von aromatischen Nitroverbindungen beschrieben.

In US 6,953,869 wird die Abtrennung von Trinitrokresolen und Pikrinsäure aus Nitriersäure durch Oxidation mit konzentrierter Salpetersäure bei Temperaturen von 70°C beschrieben. In US 4,604,214 wird ein Oxidationsprozess unter Verwendung von Fenton-Reagenz zur Oxidation von Trinitorkresolen und Pikrinsäure beschrieben, wobei ein Überschuss an Oxidationsmittel erforderlich ist und zudem keine vollständige Entfernung der aromatischen Nitroverbindungen möglich ist. CN-A1 600 697 beschreibt die Oxidation von p-Nitrophenol unter kombinierte Anwendung von UV-Licht, Fenton-Reagenz (H₂O₂/Fe(II)) und/oder anodischer Oxidation an PbO₂-Anoden.

In der Publikation "Journal of Hazardous Materials", (Vol. 161, No. 2-3, 2009, S.1017-1023) wird ein Verfahren zum elektrochemischen Abbau von Dinitrotoluol und Trinitrotoluol aus der Abfall-Säure der aromatischen Nitrierung beschrieben, wobei die aromatischen Nitroverbindungen mittels Wasserstoffperoxid oxidiert werden, welches zuvor in situ aus in der Abfall-Säure dispergiertem Sauerstoff kathodisch erzeugt wurde. Das hier beschriebene elektrolytische Verfahren arbeitet mit Zufuhr von Sauerstoff und ohne Trennung von Anoden- und Kathodenraum.

In der Veröffentlichung "Proceedings of the 1992 Incineration Conference", (1992, S.167-174), wird über die indirekte anodische Oxidation von Di- und Trinitrotoluol in Salpeter-saurer Lösung mittels anodisch erzeugter Ag²⁺ Ionen berichtet. Das Verfahren wird in einem Parallelplattenreaktor mit Platinanoden und einer Nafion-Kationen-Austauschermem-bran durchgeführt. Das beschriebene elektrochemische Verfahren ist sehr empfindlich gegenüber Sulfat- oder Halogenid-Ionen und beinhaltet zudem die Produktion von toxischem Kohlenmonoxid. Zudem sind aufwändige Prozessschritte zur Abtrennung der Silberionen aus dem Ablauf notwendig.

In CN-A1 850 643 wird der Abbau von Anilin und Nitrobenzol in Abwässern durch einen elektrochemischen Prozess beschrieben. Hierbei werden die aromatischen Nitroverbindungen durch Oxidation im Anodenraum abgebaut, wobei insbesondere eine Elektrolysevorrichtung umfassend eine Anode bestehend aus einem Titangrund-material beschichtet mit Ruthenium-, Iridium- oder Bleioxid sowie eine Kationenaustauschermembran eingesetzt wird.

Generell haben die oben beschriebenen, zum Teil elektrochemischen Oxidationsprozesse den Nachteil, dass zusätzliche aufwändige Separationsschritte und eine oft komplizierte Gerätetechnik, z.B. eine Gaseinleitung notwendig sind. Zudem muss oft mit einem hohen Überschuss an Oxidationsmittel gearbeitet werden. Meist kann kein ausreichender bzw. vollständiger Abbau der umweltschädlichen aromatischen Nitroverbindungen mit den im Stand der Technik bekannten Oxidationsverfahren erreicht werden. Darüber hinaus weisen die bekannten Verfahren beziehungsweise die Vorrichtungen zur Durchführung der Verfahren eine unzureichende Standzeit auf.

Die im Stand der Technik bekannten Verfahren und Vorrichtungen zur Abtrennung von aromatischen Nitroverbindungen aus Abwässern und Prozesswässern können zudem nicht gewährleisten, dass eine gleichzeitige Oxidation von mehreren verschiedenartigen aromatischen Nitroverbindungen möglich ist und, dass es nicht zur Bildung von gegebenenfalls toxischen Abbauprodukten kommt.

Daher besteht eine Aufgabe der vorliegenden Erfindung darin, ein technisch mit einfachen Mitteln durchführbares Verfahren und eine geeignete Vorrichtung zur Durchführung einer elektrochemischen Oxidation von aromatischen Nitroverbindungen in wässrigen Zusammensetzungen, und insbesondere ein Verfahren zur Aufbereitung von alkalischen Prozessabwässern der Nitrierung von aromatischen Verbindungen, bereitzustellen. Dabei soll ein vollständiger oder nahezu vollständiger oxidativer Abbau der aromatischen Nitroverbindungen zu toxikologisch unbedenklichen Verbindungen gewährleistet werden.

Das entstehende aufbereitete Prozesswasser soll keine toxischen, umwelttoxischen und/oder explosiven Substanzen aufweisen, und es soll einer konventionellen Abwasseraufbereitung, inklusiver einer mikrobiologischen Reinigungsstufe, zugeführt werden können. Als Ergebnis des erfindungsgemäßen Verfahrens und/oder als Ergebnis einer nachgeschalteten konventionellen Abwasseraufbereitung sollte das Abwasser alle derzeitigen EU-Grenzwerte erfüllen. Weiterhin sollen sich das Verfahren durch eine stabile Verfahrensweise und die Vorrichtung durch eine hohe Verfahrenslaufzeit/Standzeiten der Elektrolysezelle auszeichnen. Das Verfahren soll kostengünstig und technisch - auch im größeren Maßstab - einfach zu realisieren sein.

Es wurde überraschend gefunden, dass sich mit Hilfe des im folgenden beschriebenen Verfahren und mittels der beschriebenen Elektrolysevorrichtung verschiedene nitroaromatische Verbindungen, welche in verschiedenen Formen (z.B. gelöst, emulgiert und suspendiert) in einer wässrigen Zusammensetzung vorliegen können, in einer anodischen Oxidation unter Verwendung spezieller Anoden bei hoher anodischer Stromdichte vollständig abbauen lassen.

Ein weiterer Vorteil des erfindungsgemäßen elektrochemischen Verfahrens ist, dass die Haltbarkeit der Elektrodenmaterialien, insbesondere des Anodenmaterials, sowie des Separatormaterials über einen langen Zeitraum erhalten bleiben. So können mit dem in der vorliegenden Erfindung beschriebenen Verfahren sowie mit der erfindungsgemäßen Vorrichtung hohe Verfahrenslaufzeiten von bis zu 2 Jahren verwirklicht werden. Insbesondere konnte gezeigt werden, dass eine stabile Fahrweise für das erfindungsgemäße Verfahren sowie für die erfindungsgemäße Vorrichtung von mindestens 750 Stunden möglich ist.

Darüber hinaus wird das durch Bildung von Gasen verursachte Schäumen der Elektrolyt-Zusammensetzung und insbesondere des Anolyten, was bei den im Stand der Technik beschriebenen Verfahren meist ein Problem darstellt, im erfindungsgemäßen Verfahren vermindert oder ganz verhindert.

In DE-A 10 2004 026 447 wird eine Elektrolysezelle mit dreiteiligem Aufbau zum Abtrennen von Sulfationen aus Wässern beschrieben, wobei unter anderem eine mit Bordotiertem Diamant beschichtete Anode verwendet wird. Diamantbeschichtete Elektroden sind auch aus der EP 1036861 A1 bekannt.

Die vorliegende Erfindung bezieht sich auf ein Verfahren zur elektrochemischen Behandlung, insbesondere zur elektrochemischen Oxidation, von aromatischen Nitroverbindungen, umfassend die Schritte:
a) Einführen einer wässrigen Zusammensetzung, enthaltend mindestens eine aromatische Nitroverbindung, in den Anodenraum einer Elektrolysezelle,
b) Durchführen einer Elektrolyse,
wobei die Elektrolysezelle mindestens einen Anodenraum und mindestens einen Kathodenraum aufweist, welche durch einen Separator voneinander getrennt sind,
und wobei die Elektrolysezelle mindestens eine Anode aufweist, welche mindestens
ein Anodensegment enthaltend Platin umfasst,
   wobei die Elektrolyse bei einer anodischen Stromdichte im Bereich von 2,5 bis 10 kA/m² und einer Zellspannung im Bereich von 4 bis 15 V, durchgeführt wird;
oder ein Anodensegment bestehend aus einem Trägermaterial und einer Beschichtung umfasst,
   wobei das Trägermaterial aus mindestens einem Metall , ausgewählt aus der Gruppe bestehend aus Niob (Nb), Tantal (Ta), Titan (Ti) und Hafnium (Hf) besteht, und wobei die Beschichtung aus Bor-dotiertem Diamant besteht,
   und wobei die Elektrolyse bei einer anodischen Stromdichte im Bereich von 0,75 bis 1,25 kA/m² und einer Zellspannung im Bereich von 4 bis 15 V durchgeführt wird.

Generell kann das beschriebene erfindungsgemäße Verfahren im gesamten pH-Bereich, d.h. sowohl mit sauren wie auch mit basischen Anolyten durchgeführt werden. In einer bevorzugten Ausführungsform betrifft die Erfindung ein Verfahren zur elektrochemischen Behandlung, insbesondere zur elektrochemischen Oxidation, von aromatischen Nitroverbindungen wie oben beschrieben, wobei es sich bei der wässrige Zusammensetzung (Anolyt) um alkalisches Prozessabwasser aus der Nitrierung von aromatischen Verbindungen handelt. Weiterhin bevorzugt weist die wässrige Zusammensetzung einen pH-Wert im Bereich von 4 bis 14, insbesondere im Bereich von 4 bis 12, insbesondere von 4 bis 10 auf.

Unter einer aromatischen Nitroverbindung im Sinne der vorliegenden Erfindung werden organische Verbindungen verstanden, die einen 6 bis 14-gliedrigen aromatischen Ring, insbesondere ausgewählt aus Phenyl, Naphtyl, Anthracen oder Phenanthren aufweisen, an den direkt mindestens eine Nitrogruppe (-NO₂) gebunden ist, wobei der aromatische Ring auch weitere Substituenten aufweisen kann, insbesondere ausgewählt aus C₁-C₆ Alkyl, C₂-C₆ Alkenyl, C₂-C₆ Alkinyl, Phenyl, Benzyl, Halogenyl, -OH, - COOH und -COOR¹, mit R¹ = C₁-C₆ Alkyl, C₂-C₆ Alkenyl, C₂-C₆ Alkinyl, Phenyl oder Benzyl. Bevorzugt weist die aromatische Nitroverbindung einen 6-gliedrigen aromatischen Ring auf.

Insbesondere bezieht sich die vorliegende Erfindung auf ein Verfahren zur elektrochemischen Behandlung, insbesondere zur elektrochemischen Oxidation, von aromatischen Nitroverbindungen der allgemeinen Formel (I) 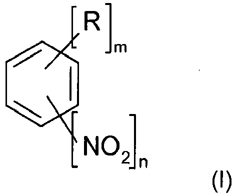 wobei:
n eine ganze Zahl von 1 bis 6 ist;
m = 0 oder m eine ganze Zahl von 1 bis 5 ist;
R ausgewählt ist aus C₁-C₆ Alkyl, C₂-C₆ Alkenyl, C₂-C₆ Alkinyl, Phenyl, Benzyl, -F, -Cl, -Br, -OH, -COOH oder -COOR¹, mit R¹ = C₁-C₆ Alkyl, C₂-C₆ Alkenyl, C₂-C₆ Alkinyl, Phenyl und Benzyl.

Insbesondere bezieht sich die vorliegende Erfindung auf ein Verfahren zur elektrochemischen Behandlung von einzelnen oder mehreren der oben beschriebenen aromatischen Nitroverbindungen.

In einer bevorzugten Ausführungsform der Erfindung handelt es sich um ein Verfahren zur elektrochemischen Behandlung von aromatischen Nitroverbindungen, dadurch gekennzeichnet, dass es sich bei den aromatischen Nitroverbindungen um mindestens eine Verbindung ausgewählt aus der Gruppe bestehend aus Nitrobenzol (NB), Dinitrobenzol (DNB), Trinitrobenzol (TNB), Mononitrotoluol (MNT), Dinitrotoluol (DNT), Trinitrotoluol (TNT), Nitrochlorbenzol (NCB), Mononitroxylole, Dinitroxylole, Trinitroxylole, Mononitrokresol, Dinitrokresol, Trinitrokresol, Mononitrophenol, Dinitrophenol, Trinitrophenol, Mononitrobenzoesäure, Dinitrobenzoesäure, Trinitrobenzoesäure, Mononitroxylenole, Dinitroxylenole und Trinitroxylenole handelt, wobei alle isomeren Formen der genannten Verbindungen umfasst sind.

Aromatische Nitroverbindungen, die keine Hydroxylgruppe oder Carboxylgruppe im Molekül enthalten, werden im Rahmen der Erfindung auch als "neutrale Nitrokörper" oder "neutrale Nitroaromaten" bezeichnet. Nitrophenole, Nitrokresole, Nitroxylenole und Nitrobenzoesäuren werden im Folgenden auch als Hydroxynitroaromaten zusammengefasst. In einer bevorzugten Ausführungsform handelt es sich bei der aromatischen Nitro-Komponente um eine Mischung aus mindestens zwei oder weiteren der oben genannten Verbindungen.

Die aromatische(n) Nitroverbindung(en) kann/können in der wässrigen Zusammensetzung in gelöster, emulgierter oder suspendierter Form vorliegen. Insbesondere bezieht sich die Erfindung auf ein oben beschriebenes Verfahren zur elektrochemischen Behandlung, insbesondere zur elektrochemischen Oxidation, von aromatischen Nitroverbindungen, wobei die aromatische(n) Nitroverbindung(en) in mindestens zwei der oben genannten Formen vorliegt/vorliegen.

Weiterhin bevorzugt ist ein Verfahren wie oben beschrieben, dadurch gekennzeichnet, dass die wässrige Zusammensetzung (ggf. neben mindestens einer gelösten Nitroverbindung) mindestens eine aromatische Nitroverbindung, vorzugsweise in suspendierter Form enthält.

In einer bevorzugten Ausführungsform der Erfindung enthält die wässrige Zusammensetzung (Anolyt) mindestens eine aromatische Nitroverbindung in einer Menge im Bereich von 0,1 bis 5 Gew.%, bevorzugt im Bereich von 0,5 bis 2,5 Gew.-% (bezogen auf die gesamte wässrige Zusammensetzung).

In einer bevorzugten Ausführungsform der Erfindung enthält die wässrige Zusammensetzung neben der aromatischen Nitroverbindung weitere Zusatzstoffe, insbesondere in einer Konzentration von 0,001 bis 30 g/l, bevorzugt in einer Konzentration von 0,01 bis 10 g/l. Die wässrige Zusammensetzung kann neben der aromatischen Nitroverbindung auch anorganische Nitrite enthalten.

Als weitere Zusatzstoffe können der wässrigen Zusammensetzung enthaltend mindestens eine aromatische Nitroverbindung wasserlösliche Salze zur Erhöhung der Leitfähigkeit zugegeben werden. Diese Salze werden insbesondere ausgewählt aus wasserlöslichen anorganischen Salzen, insbesondere enthaltend Nitrat, Sulfat und/oder Carbonat, insbesondere Alkali-Salze, enthaltend Nitrat, Sulfat und/oder Carbonat. Die genannten Salze zur Erhöhung der Leitfähigkeit können insbesondere in einer Konzentration im Bereich von 0,1 bis 30 g/l, bevorzugt im Bereich von 0,1 bis 10 g/l, insbesondere bevorzugt im Bereich von 1 bis 10 g/l (bezogen auf die wässrige Zusammensetzung) in der wässrigen Zusammensetzung enthalten sein.

Unter einem wasserlöslichen Salz im Sinne der vorliegenden Erfindung wird allgemein ein Salz mit einer Löslichkeit in Wasser von größer oder gleich 1 mol/l verstanden.

Weiterhin bezieht sich die vorliegende Erfindung auf ein Verfahren wie oben beschrieben, dadurch gekennzeichnet, dass die wässrige Zusammensetzung (Anolyt) enthaltend mindestens eine aromatische Nitroverbindung zusätzlich (mindestens) einen Redoxmediator (z.B. ein Alkalisulfat) enthält.

Der Redox-Mediator kann insbesondere in einer Konzentration im Bereich von 0,001 bis 0,2 mol/l, insbesondere in einem Bereich von 0,01 bis 0,05 mol/l (bezogen auf die wässrige Zusammensetzung) in der wässrigen Zusammensetzung enthalten sein.
Bei dem Redoxmediator kann es sich insbesondere um mindestens eine Verbindung handeln ausgewählt aus anorganischen Salzen enthaltend Sulfationen, insbesondere einem Alkali- oder Erdalkalisulfat; und anorganischen Salzen des Cers (Ce) oder Praseodyms (Pr), insbesondere Nitrate, Sulfate und/oder Hydrogenphosphat-Salze des Cers oder Praseodyms.

In einer Ausführungsform der Erfindung enthält die wässrige Zusammensetzung (Anolyt) 0,1 bis 10 g/l, bevorzugt 1 bis 5 g/l, an Cer- und/oder Praseodymionen.

Als Katholyt wird vorzugsweise eine Lösung eingesetzt ausgewählt aus der Gruppe bestehend aus Lithiumhydroxidlösung, Natriumhydroxidlösung, Kaliumhydroxidlösung und Ammoniumsulfatlösung.
Die Konzentration der Katholyt-Lösung liegt bevorzugt bei 0,1 bis 5 mol/l, besonders bevorzugt bei 0,5 bis 2 mol/l. Insbesondere kann eine Ammoniumsulfatlösung als Katholyt eingesetzt werden mit einer Konzentration im Bereich von 0,5 bis 2,5 mol/l.

Das erfindungsgemäße Verfahren kann insbesondere so durchgeführt werden, dass die Temperatur der wässrigen Zusammensetzung im Anodenraum bei der Elektrolyse le im Bereich von 30 bis 90°C, besonders bevorzugt im Bereich von 40 bis 70°C liegt. Die Elektrolysedauer kann bevorzugt im Bereich von 0,3 bis 10 h, insbesondere 1 bis 10 h, bevorzugt im Bereich von 1 bis 5 h liegen. Das beschriebene Verfahren kann im kontinuierlichen Modus, in einem Modus mit partiellem Recycling des Prozessstroms, z. B. mit einem Recyclingverhältnis im Bereich von 80 bis 98 %, bevorzugt im Bereich von 90 bis 95 %, oder Batch-weise betrieben werden.

Die vorliegende Erfindung bezieht sich auf ein Verfahren wie oben beschrieben, bei dem die Elektrolysezelle mindestens einen Anodenraum und mindestens einen Kathodenraum aufweist, welche durch einen Separator voneinander getrennt sind, und wobei der Separator ausgewählt ist aus
- unspezifischen Separatoren auf der Basis von anorganischen oder organischen porösen Werkstoffen (z.B. Separatoren aus Sinter-Quarz);
- Kationenaustauschermembranen auf Basis von Polyethylen-Kompositpolymeren und/oder Polyvinylchlorid-Kompositpolymeren und/oder Polyvinylidenfluorid (PVDF) und/oder Polytetrafluorethen (PTFE), insbesondere enthaltend Sulfonatgruppen (z.B. MC-3470, Hersteller lonac)
- stark basische Anionenaustauschermembran insbesondere auf Basis von Kompositpolymeren, z.B: der oben genannten Polymeren, enthaltend tertiäre Aminogruppen (z.B. MC-3450 des Herstellers lonac).

Die Anode der im erfindungsgemäßen Verfahren eingesetzten Elektrolysezelle umfasst bevorzugt einen Grundrahmen, auf den mindestens ein Anodensegment befestigt (z.B. aufgeschraubt) ist, wobei der Grundrahmen aus einem Metall besteht, das eine hohe Überspannung für die Bildung von Sauerstoff aufweist und sich unter den gegebenen Bedingungen elektrochemisch passiv verhält.

Insbesondere kann der Grundrahmen aus einem oder mehreren so genannten "Ventilmetall" bestehen. Unter einem Ventilmetall ist ein Metall zu verstehen, dass sich bei anodischer Polung mit einer halbleitenden (isolierenden) Oxidschicht überzieht, die auch bei hoher Überspannung nicht leitend wird, und somit die Elektrolyse blockiert. Als Ventilmetalle sind unter anderem Niob, Tantal, Titan, Hafnium, Zirkonium und Wolfram zu nennen.
Bevorzugt besteht der Grundrahmen aus mindestens einem Metall ausgewählt aus Titan (Ti), Niob (Nb), Tantal (Ta), oder Hafnium (Hf). Es besteht auch die Möglichkeit, Legierungen aus den genannten Metallen einzusetzen.

Die Erfindung bezieht sich auf ein Verfahren wie oben beschrieben, dadurch gekennzeichnet, dass die Elektrolysezelle eine Anode aufweist, welche mindestens ein Anodensegment bestehend aus einem Trägermaterial und einer Beschichtung umfasst,
wobei das Trägermaterial aus mindestens einem Ventilmetall, bevorzugt aus mindestens einem Metal ausgewählt aus der Gruppe bestehend aus Niob (Nb), Tantal (Ta), Titan (Ti) und Hafnium (Hf), besonders bevorzugt aus Niob (Nb), besteht, und wobei die Beschichtung aus Bor-dotiertem Diamant besteht,
und wobei die Elektrolyse bei einer anodischen Stromdichte im Bereich von 0,1 kA/m² bis 2 kA/m² bevorzugt im Bereich von 0,1 bis 1,25, bevorzugt im Bereich von 0,75 bis 1,25 kA/m² und einer Zellspannung im Bereich von 4 bis 15 V, bevorzugt im Bereich von 5 bis 9 V, durchgeführt wird.

In einer bevorzugten Ausführungsform weist das oben beschriebene Anodensegment bestehend aus einem Trägermaterial und einer Beschichtung eine Beschichtung mit Bor-dotiertem Diamant zu 90 bis 100 % (bezogen auf die elektrochemisch aktive Anodenfläche bzw. bezogen auf die elektrochemisch aktive Fläche des Anodensegmentes/der Anodensegmente) auf. Vorzugsweise können Anodensegmente eingesetzt werden, welche eine entsprechende Beschichtung auf zwei, bevorzugt an allen Seiten aufweisen. Insbesondere weist der Bor-dotierte Diamant eine Dotierung von 0,01 bis 3 %, insbesondere von 0,1 bis 0,5 %, auf.

In einer weiteren Ausführungsform weist das oben beschriebene Anodensegment (bestehend aus einem Trägermaterial und einer Beschichtung) eine Beschichtung aus Bor-dotiertem Diamant in einer Schichtdicke im Bereich von 5 bis 50 µm, insbesondere von 10 bis 40 µm auf. Das Trägermaterial bestehend aus einem Metall ausgewählt aus Niob (Nb), Tantal (Ta), Titan (Ti) und Hafnium (Hf), insbesondere bestehend aus Niob (Nb), hat vorzugsweise eine Dicke von 1 bis 4 mm, insbesondere von 2 bis 3 mm.

Eine Ausführungsform der Erfindung bezieht sich auf ein Verfahren zur elektrochemischen Behandlung von aromatischen Nitroverbindungen, wie oben beschrieben, dadurch gekennzeichnet, dass die Elektrolysezelle eine Anode aufweist, welche mindestens ein Anodensegment bestehend aus einem Trägermaterial und einer Beschichtung umfasst, wobei das Trägermaterial aus mindestens einem Metall ausgewählt aus der Gruppe bestehend aus Niob (Nb), Tantal (Ta), Titan (Ti) und Hafnium (Hf) besteht; wobei die Beschichtung aus Bor-dotiertem Diamant besteht; wobei das Anodensegment auf einem Grundrahmen bestehend aus mindestens einem Metall ausgewählt aus Niob (Nb), Tantal (Ta), Titan (Ti) und Hafnium (Hf) befestigt ist, und wobei die Elektrolyse bei einer anodischen Stromdichte im Bereich von 0,75 kA/m² bis 1,25 kA/m² und einer Zellspannung im Bereich von 4 bis 15 V durchgeführt wird, und wobei die Beschichtung aus Bor-dotiertem Diamant auf dem Trägermaterial eine Schichtdicke im Bereich von 5 bis 50 µm aufweist.

In der oben beschriebenen Ausführungsform einer Anode umfassend mindestens ein Anodensegment bestehend aus einem Trägermaterial und einer Beschichtung ist der Grundrahmen bevorzugt nahe zu vollständig oder vollständig von dem Anodensegment bzw. den Anodensegmenten bedeckt. Insbesondere kann in dieser Ausführungsform auch eine Überdeckung des Grundrahmens durch das Anodensegment bzw. die Anodensegmente von mehr als 100 % realisiert werden. In dieser Ausführungsform kann der Grundrahmen insbesondere nicht vollflächig gefertigt sein und etwa aus einem Gitter aus elektrisch leitend und mechanisch stabil miteinander verbundenen (z.B. geschraubt, geschweißt) Metallstreifen bestehen. An diesen Metallstreifen können dann insbesondere die eigentlichen Anodensegmente befestigt werden. Bevorzugt verfügt die Grundrahmen-Gitterstruktur rückseitig über Kontaktbolzen oder Kontaktfahnen für die Stromzuführung und kann insbesondere mittels der Stromzuführungen in der Anodenschale fixiert werden.

Die Erfindung bezieht sich auch auf ein Verfahren wie oben beschrieben, dadurch gekennzeichnet, dass die Elektrolysezelle eine Anode aufweist, welche mindestens ein Anodensegment enthaltend bzw. bestehend aus Platin umfasst.

Insbesondere bezieht sich die Erfindung auf ein Verfahren wie oben beschrieben, dadurch gekennzeichnet, dass die Elektrolysezelle eine Anode aufweist, welche mindestens ein Anodensegment bestehend aus Platin umfasst,
und wobei die Elektrolyse bei einer anodischen Stromdichte im Bereich von 0,1 bis 10 kA/m², bevorzugt im Bereich von 2,5 bis 10 kA/m², bevorzugt im Bereich von 4 bis 10 kA/m², insbesondere bevorzugt im Bereich von 2 bis 6 kA/m² und einer Zellspannung im Bereich von 4 bis 15 V, bevorzugt im Bereich von 5 bis 9 V, durchgeführt wird.

Bevorzugt wird die Elektrolyse an einer oben beschriebenen Platinsegment-Elektrode bei einer anodischen Stromdicht über 2,5 kA/m², insbesondere über 4 kA/m² durchgeführt.

Bevorzugt kann die Elektrolysezelle eine Anode aufweisen, welche mindestens ein Anodensegment enthaltend bzw. bestehend aus Platin umfasst,
wobei das Anodensegment bzw. die Anodensegmente in Form von Folien, Blech oder Drahtgewebe vorliegt und auf einem Grundrahmen bestehend aus mindestens einem Metall ausgewählt aus Niob (Nb), Tantal (Ta), Titan (Ti) und Hafnium (Hf), befestigt ist,
und wobei das Anodensegment bzw. die Anodensegmente die Oberfläche des Grundrahmens zu nicht mehr als 30 %, bevorzugt zu nicht mehr als 10 %, bedeckt.

Insbesondere ist eine Abdeckung des Grundrahmens durch die oben beschriebenen elektrochemischen aktiven Anodensegmente im Bereich von 1 bis 30 %, bevorzugt im Bereich von 1 bis 10 %, vorteilhaft.

Insbesondere wird in der bevorzugten Ausführungsform mindestens ein Anodensegment bestehend aus fein poliertem reinem Platin eingesetzt. Solche Platin-Elektroden sind dem Fachmann bekannt und kommerziell erhältlich. Typischerweise kann eine glatte, fein polierte Platinelektrode durch das Polieren mit einer Silicagel-Polier-Zusammensetzung mit einer Korngröße von etwa 0,05 µm erhalten werden.

Als Begleitprodukte der Elektrolyse wird insbesondere Wasserstoff mit hoher Reinheit gewonnen. Dieser Wasserstoff kann in anderen Verfahren, z.B. bei der Weiterverarbeitung der aromatischen Nitroverbindungen durch katalytische Reaktion (Reduktion), eingesetzt werden.

Gegenstand ist auch eine Vorrichtung zur elektrochemischen Behandlung von aromatischen Nitroverbindungen, umfassend mindestens eine Elektrolysezelle,
wobei die Elektrolysezelle mindestens einen Anodenraum und mindestens einen Kathodenraum aufweist, welche durch einen Separator voneinander getrennt sind,
und wobei die Elektrolysezelle mindestens eine Anode aufweist, welche mindestens ein Anodensegment enthaltend Platin oder ein Anodensegment bestehend aus einem Trägermaterial und einer Beschichtung umfasst, wobei das Trägermaterial mindestens ein Metall enthält, ausgewählt aus der Gruppe bestehend aus Niob (Nb), Tantal (Ta), Titan (Ti) und Hafnium (Hf), wobei die Beschichtung aus Bor-dotiertem Diamant besteht, und wobei die Elektrolysezelle einen Abstandshalter zwischen dem Separator und der Anode aufweist, wobei der Abstand zwischen Anode und Kathode im Bereich von 4 bis 8 mm liegt;
und wobei der Separator eine Anionenaustauschermembran ist.

Insbesondere kann der Abstandshalter zwischen Anode und Kathode ein mehrlagiges Gewebe, bevorzugt ein dreilagiges, dreidimensionales Gewebe (Netz), aus nicht-leitfähigem Kunststoff darstellen, wobei die verschiedenen Lagen eine unterschiedliche, insbesondere abgestufte Apertur (offener Flächenanteil) aufweisen. Vorzugsweise wird der Abstandshalter aus einem oxidationsbeständigen, elektrisch nicht leitenden Kunststoff eingesetzt, wobei der oxidationsbeständige, elektrisch nicht leitende Kunststoff ausgewählt ist aus Polyestern und Polyalkylen (z.B. Polyethylen, Polypropylen).

In einer besonderen Ausführungsform der Erfindung weist der Abstandshalter drei verschiedene Lagen mit unterschiedlicher Apertur (offener Flächenanteil) auf, wobei die an der Anode sowie am Separator anliegenden Lagen des Abstandshalters eine Apertur im Bereich von 50 bis 90%, vorzugsweise 60 bis 75% aufweisen und wobei die mittlere Lage des Abstandshalters eine Apertur von 30 bis 60 %, vorzugsweise eine Apertur von 40 bis 60% aufweisen. Durch diese Abstufung der Apertur des Abstandshalters kann insbesondere die Ausbildung einer turbulenten Strömung nahe der Anode unterstützt werden.

Insbesondere umfasst die erfindungsgemäße Vorrichtung einen Zellenkörper, gebildet aus mindestens einem Kathoden- und mindestens einem Anodenraum, in der jeweils benötigten Multiplikation, versehen mit den Anschlüssen für Zufuhr und Ableitung des Anolyten und Katholyten, sowie Dichtungssystemen, Druckrahmen und Stromzuführungen für die Elektroden, wobei Auswahl und Anordnung dem Fachmann bekannt sind. Bevorzugt sind eine Zweikammer-Elektrolysezelle oder eine Dreikammer-Elektrolysezelle.

Die Elektrolysezelle wird bevorzugt aufwärts von den Elektrolyten durchströmt, d.h. von unten nach oben.

Die Kathode besteht bevorzugt aus einem hinreichend korrosionsbeständigen Metall oder Kohlenstoff (in Form von Graphit- oder Glaskohlenstoff). Vorzugsweise ist die Kathode aus Edelstahlblech gefertigt. Insbesondere weist das Kathodenmaterial eine Resistenz gegen Wasserstoff-Versprödung auf.

Weiterhin ist die vorliegende Erfindung gerichtet auf die Verwendung einer oben beschriebenen Vorrichtung zur Aufbereitung von Abwässern oder Prozesswässern, insbesondere aus der Nitrierung von aromatischen Verbindungen, insbesondere von alkalischen Prozesswässern.

Die Erfindung wird anhand der folgenden Ausführungsbeispiele näher erläutert.

### Ausführungsbeispiel 1

Es wurde eine wässrige Prozesslösung aus einem chemischen Produktionsprozess eingesetzt, welche wie folgt charakterisiert wurde:
- 1,5 g/l: NaNO₂
- 20 g/l: Na₂CO₃
- 10 mg/l: Mononitrotoluol-Isomerengemisch mit emulgierten Anteilen
- 1 g/l: Dinitrotoluol-Isomerengemisch mit suspendierten Anteilen
- 0,5 g/l: Trinitrokresol-Isomerengemisch mit suspendierten Anteilen.

100 ml der beschriebenen wässrigen Prozesslösung wurden in den Anodenraum einer Elektrolysezelle eingefüllt, während sich im Kathodenraum eine Natriumhydroxidlösung der Konzentration 1 mol/l befand. Die Trennung der Elektrodenräume erfolgte mittels eines Diaphragmas aus Sinterquarz mit einer Porenweite von 30 bis 50 µm. Als Anode wurde ein glattes Platinblech der Größe 1,5 cm² und einer Dicke von 0,25 mm eingesetzt. Nach Anlegen einer Gleichspannung wurde die Lösung mit einer anodischen Stromdichte von 0,6 A/cm² bei einer Temperatur von 70°C elektrolysiert.

Das Elektrolyseverfahren wurde im Batch-Betrieb durchgeführt. Nach vier Stunden Elektrolysezeit war die zuvor dunkelbraun gefärbte Flüssigkeit klar und entfärbt. Der chemische Sauerstoffbedarf der Lösung wurde von 6.500 mg/l (ursprüngliche Prozesslösung) auf 150 mg/l vermindert, was einem Umsatz von 98% entsprach. Nitrit war in der Lösung nach Beendigung der Elektrolyse nicht mehr nachweisbar. Der chemische Sauerstoffbedarf wurde gemäß der DIN 38409/H41 bestimmt.

### Ausführungsbeispiel 2

Eine Prozesslösung wie in Ausführungsbeispiel 1 beschrieben wurde in eine Elektrolsezelle eingeführt, wobei als Anode eine 4 cm² große Anode aus Bor-dotiertem Diamant auf Niob-Blech der Dicke 1,5 mm eingesetzt wurde. Die Elektrolyse wurde bei einer Temperatur von 60°C und bei einer anodischen Stromdichte von 0,125 A/cm² durchgeführt. Der Versuchsaufbau entsprach ansonsten dem Aufbau wie in Ausführungsbeispiel 1 beschrieben. Das Elektrolyseverfahren wurde im Batch-Betrieb durchgeführt. Nach zwei Stunden Elektrolysezeit war die Lösung im Anodenraum vollkommen klar und farblos. Der chemische Sauerstoffbedarf hatte sich von anfänglich 6.500 mg/l auf unter 50 mg/l vermindert, was einem Umsatz von mehr als 99% entspricht. Nitrit war in der Lösung aus dem Anodenraum nicht mehr nachweisbar.

### Ausführungsbeispiel 3

Es wurde eine wässrige Prozesslösung enthaltend:
1,0 g/l Natriumnitrit
sowie Mononitrotoluol, Dinitrotoluol, Nitrokresole,
eingesetzt, wobei der chemische Sauerstoffbedarf (CSB) bei 5.100 mg/l lag.
Es wurde eine Elektrolysezelle mit einer Anode bestehend aus einem Titan/Hilfsrahmen mit einer darauf befestigten Bor-dotierten Diamantelektrode auf Niob-Träger eingesetzt. Die Anodenfläche betrug 75 cm².

Ferner umfasste die Elektrolysezelle im Anodenraum ein Abstandshalter in Form eines Kunststoffgewebes mit 3 Lagen unterschiedlicher Apertur. Die Lagen des Abstandshalter, welche an der Anode sowie am Separator anlagen, wiesen eine Apertur im Bereich von 60 bis 75% auf, die mittlere Lage des Abstandshalters wies eine Apertur von 40 bis 60% auf. Der Abstand zwischen Anode und Separator lag bei 6,5 mm.

Es wurde eine Kationenaustauschermembran vom Typ MC/3470 (Hersteller lonac, USA) sowie eine Kathode aus CrNiTi-Edelstahl eingesetzt. Die Kathodenfläche betrug 100 cm². Als Katholyt wurde eine 1 M Natriumhydroxid-Lösung eingesetzt. 2,5 l der genannten Prozesslösung wurden im Batch-Modus bei einer Stromstärke von 10 A und bei einer Temperatur von 70°C elektrolysiert.

Das Elektrolyseverfahren wurden im Batch-Betrieb und mit partiellem Recyling im Bereich von 80 bis 95 % durchgeführt, wobei die im Folgenden beschriebenen Ergebnisse für die Fahrweisen ähnlich waren. Nach vier Stunden Elektrolysezeit wurde in einer Probe aus dem Anodenraum ein chemischer Sauerstoffbedarf von 600 mg/l gemessen, was einem Umsatz von 88 % entspricht.

Während der Elektrolyse waren 150 ml der Flüssigkeit aus dem Anodenraum in den Kathodenraum übergegangen. Der chemische Sauerstoffbedarf (CSB) des Katholyten betrug nach Ende der Elektrolyse 40 mg/l (vor Versuchsbeginn 0,0 mg/l).

### Ausführungsbeispiel 4

Es wurde eine wässrige Prozesslösung wie in Beispiel 1 beschrieben eingesetzt, es wurde die Elektrolysezelle wie in Ausführungsbeispiel 3 beschrieben verwendet.

Der Flüssigkeit im Anodenraum wurde zusätzlich eine solche Menge Natriumsulfat hinzugefügt, dass sich eine Konzentration von 5 g/l bezogen auf die Gesamtflüssigkeitsmenge ergeben hat. Das Elektrolyseverfahren wurden im Batch-Betrieb und mit partiellem Recyling im Bereich von 80 bis 95 % durchgeführt, wobei die im Folgenden beschriebenen Ergebnisse für die Fahrweisen ähnlich waren. Die Elektrolyse wurde bei einer Stromstärke von 10 A und bei einer Temperatur von 60°C durchgeführt. Nach vier Stunden Elektrolysezeit wurde der chemische Sauerstoffbedarf der Anodenraum-Flüssigkeit auf 360 mg/l bestimmt, was einem Umsatz von 94 % entspricht.

### Ausführungsbeispiel 5

Die Elektrolyse wurde wie in Ausführungsbeispiel 4 beschrieben durchgeführt, mit dem Unterschied, dass der Flüssigkeit im Anodenraum anstelle des Natriumsulfats Praseodymnitrat zugefügt wurde, so dass sich eine Konzentration von Praseodymionen in der Anodenraum-Flüssigkeit von 0,005 mol/l ergab. Das Elektrolyseverfahren wurden im Batch-Betrieb und mit partiellem Recyling im Bereich von 80 bis 95 % durchgeführt, wobei die im Folgenden beschriebenen Ergebnisse für die Fahrweisen ähnlich waren. Nach einer Elektrolysezeit von 3,5 h ergab sich eine Verminderung des chemischen Sauerstoffbedarfs auf 270 mg/l, was einem Umsatz von 96 % entspricht.

### Ausführungsbeispiel 6:

Es wurde eine wässrige Prozesslösung enthaltend Nitrotoluole und Nitrokresole mit einem chemischen Sauerstoffbedarf von 7.200 mg/l eingesetzt. Die Elektrolysezelle enthielt Anode, Kathode sowie Abstandshalter wie in Ausführungsbeispiel 4 und 5 beschrieben. Zur Trennung der Elektrodenräume diente eine Anionenaustauschermembran vom Typ MA/3450 (Hersteller lonac, USA). Als Katholyt kam eine 2 M Ammoniumsulfatlösung zum Einsatz. Das Elektrolyseverfahren wurden im Batch-Betrieb und mit partiellem Recyling im Bereich von 80 bis 95 % durchgeführt, wobei die im Folgenden beschriebenen Ergebnisse für die Fahrweisen ähnlich waren. Nach einer Elektrolysendauer von 1 h bei einer Stromstärke von 10 A betrug der Wert für den der chemische Sauerstoffbedarf (CSB) der aus dem Anodenraum abfließenden Flüssigkeit 150 mg/l. Eine Volumenzunahme der Flüssigkeit im Kathodenkreis war nicht zu verzeichnen. Der Wert für den chemischen Sauerstoffbedarf des Katholyten lag über die Gesamtdauer des Elektrolyse-Versuches hinweg bei 1 mg/l.

### Ausführungsbeispiel 7:

Es wurde eine wässrige Prozesslösung enthaltend aromatische Nitroverbindungen mit einem chemischen Sauerstoffbedarf von 6.000 mg/l eingesetzt. Als Katholyt wurde eine 2 M Ammoniumsulfat-Lösung eingesetzt. Es wurde eine Elektrolysezelle mit einer Anodenfläche von 600 cm² eingesetzt. Als Anode wurde eine Bor-dotierte Diamant Anode verwendet. Das Elektrolyseverfahren wurde im kontinuierlichen Betrieb bei einer Stromdichte von 1 kA/m² mit einem Anolyt-Volumenstrom von 1,5 l/h und bei 70 °C durchgeführt. Es konnte ein Umsatz bezogen auf den CSB-Wert des Anolyten von 89 % erreicht werden.

## Patentansprüche

1. Verfahren zur elektrochemischen Behandlung von aromatischen Nitroverbindungen, umfassend die Schritte:
a) Einführen einer wässrigen Zusammensetzung, enthaltend mindestens eine aromatische Nitroverbindung, in den Anodenraum einer Elektrolysezelle,
b) Durchführen einer Elektrolyse,
wobei die Elektrolysezelle mindestens einen Anodenraum und mindestens einen Kathodenraum aufweist, welche durch einen Separator voneinander getrennt sind,
und wobei die Elektrolysezelle mindestens eine Anode aufweist, welche mindestens
ein Anodensegment enthaltend Platin umfasst,
wobei die Elektrolyse bei einer anodischen Stromdichte im Bereich von 2,5 bis 10 kA/m² und einer Zellspannung im Bereich von 4 bis 15 V, durchgeführt wird;
oder ein Anodensegment bestehend aus einem Trägermaterial und einer Beschichtung umfasst,
wobei das Trägermaterial aus mindestens einem Metall , ausgewählt aus der Gruppe bestehend aus Niob (Nb), Tantal (Ta), Titan (Tl) und Hafnium (Hf) besteht, und wobei die Beschichtung aus Bor-dotiertem Diamant besteht,
und wobei die Elektrolyse bei einer anodischen Stromdichte im Bereich von 0,75 bis 1,25 kA/m² und einer Zellspannung im Bereich von 4 bis 15 V durchgeführt wird.

2. Verfahren gemäß Anspruch 1, **dadurch gekennzeichnet, dass** es sich bei der wässrige Zusammensetzung um alkalisches Prozessabwasser aus der Nitrierung von aromatischen Verbindungen handelt.

3. Verfahren gemäß einem der Ansprüche 1 oder 2, **dadurch gekennzeichnet, dass** es sich bei den aromatischen Nitroverbindungen um mindestens eine Verbindung handelt, ausgewählt aus der Gruppe bestehend aus Nitrobenzol (NB), Dinitrobenzol (DNB), Trinitrobenzol (TNB), Mononitrotoluol (MNT), Dinitrotoluol (DNT), Trinitrotoluol (TNT), Nitrochlorbenzol (NCB), Mononitroxylole, Dinitroxylole, Trinitroxylole, Mononitrokresol, Dinitrokresol, Trinitrokresol, Mononitrophenol, Dinitrophenol, Trinitrophenol, Mononitrobenzoesäure, Dinitrobenzoesäure, Trinitrobenzoesäure, Mononitroxylenole, Dinitroxylenole und Trinitroxylenole, wobei alle isomeren Formen der genannten Verbindungen umfasst sind.

4. Verfahren gemäß einem der Ansprüche 1 bis 3, **dadurch gekennzeichnet, dass** die wässrige Zusammensetzung mindestens eine aromatische Nitroverbindung in suspendierter Form enthält.

5. Verfahren gemäß einem der Ansprüche 1 bis 4, **dadurch gekennzeichnet, dass** die wässrige Zusammensetzung enthaltend mindestens eine aromatische Nitroverbindung zusätzlich einen Redox-Mediator enthält.

6. Verfahren gemäß einem der Ansprüche 1 bis 5, **dadurch gekennzeichnet, dass** die Temperatur der wässrigen Zusammensetzung im Anodenraum bei der Elektrolyse im Bereich von 30 bis 90°C liegt.

7. Verfahren gemäß einem der Ansprüche 1 bis 6, **dadurch gekennzeichnet, dass** die Elektrolysezelle eine Anode aufweist, welche mindestens ein Anodensegment bestehend aus Platin umfasst, wobei das Anodensegment in Form von Folien, Blech oder Drahtgewebe vorliegt und auf einem Grundrahmen bestehend aus mindestens einem Metall ausgewählt aus Niob (Nb), Tantal (Ta), Titan (Ti) und Hafnium (Hf) befestigt ist, und wobei das Anodensegment die Oberfläche des Grundrahmens zu nicht mehr als 30 % bedeckt.

8. Verfahren gemäß einem der Ansprüche 1 bis 7, **dadurch gekennzeichnet, dass** die Elektrolysezelle eine Anode aufweist, welche mindestens ein Anodensegment bestehend aus einem Trägermaterial und einer Beschichtung umfasst, wobei das Trägermaterial aus mindestens einem Metall ausgewählt aus der Gruppe bestehend aus Niob (Nb), Tantal (Ta), Titan (Ti) und Hafnium (Hf) besteht; wobei die Beschichtung aus Bor-dotiertem Diamant besteht; wobei das Anodensegment auf einem Grundrahmen bestehend aus mindestens einem Metall ausgewählt aus Niob (Nb), Tantal (Ta), Titan (Ti) und Hafnium (Hf) befestigt ist, und wobei die Elektrolyse bei einer anodischen Stromdichte im Bereich von 0,75 kA/m² bis 1,25 kA/m² und einer Zellspannung im Bereich von 4 bis 15 V durchgeführt wird, und wobei die Beschichtung aus Bor-dotiertem Diamant auf dem Trägermaterial eine Schichtdicke im Bereich von 5 bis 50 µm aufweist.

9. Vorrichtung zur elektrochemischen Behandlung von aromatischen Nitroverbindungen, umfassend mindestens eine Elektrolysezelle,
wobei die Elektrolysezelle mindestens einen Anodenraum und mindestens einen Kathodenraum aufweist, welche durch einen Separator voneinander getrennt sind,
und wobei die Elektrolysezelle mindestens eine Anode aufweist, welche mindestens ein Anodensegment enthaltend Platin oder ein Anodensegment bestehend aus einem Trägermaterial und einer Beschichtung umfasst, wobei das Trägermaterial mindestens ein Metall enthält, ausgewählt aus der Gruppe bestehend aus Niob (Nb), Tantal (Ta), Titan (Ti) und Hafnium (Hf), wobei die Beschichtung aus Bor-dotiertem Diamant besteht, und wobei die Elektrolysezelle einen Abstandshalter zwischen dem Separator und der Anode aufweist, wobei der Abstand zwischen Anode und Kathode im Bereich von 4 bis 8 mm liegt;
und wobei der Separator eine Anionenaustauschermembran ist.

10. Vorrichtung gemäß Anspruch 9, **dadurch gekennzeichnet, dass** der Abstandshalter zwischen Anode und Kathode ein mehrlagiges Gewebe aus nicht-leitfähigem Kunststoff darstellt, wobei die verschiedenen Lagen eine abgestufte Apertur aufweisen.

11. Verwendung einer Vorrichtung gemäß einem der Ansprüche 9 oder 10 zur Aufbereitung von Abwässern oder Prozesswässern aus der Nitrierung von aromatischen Verbindungen.

## Claims

1. A process for the electrochemical treatment of aromatic nitro compounds, which comprises the steps:
a) introducing an aqueous composition comprising at least one aromatic nitro compound into the anode space of an electrolysis cell,
b) carrying out an electrolysis,
where the electrolysis cell has at least one anode space and at least one cathode space which are separated from one another by a separator,
and the electrolysis cell has at least
one anode which comprises platinum,
where the electrolysis is carried out at least one anode segment comprising at an anodic power density in the range from 2.5 to 10 kA/m² and a cell potential in the range from 4 to 15 V;
or comprises an anode segment consisting of a support material and a coating,
where the support material consists of at least one metal selected from the group consisting of niobium
(Nb), tantalum (Ta), titanium (Ti) and hafnium (Hf), and the coating consists of boron-doped diamond,
and the electrolysis is carried out at an anodic current density in the range from 0.75 to 1.25 kA/m² and a cell potential in the range from 4 to 15 V.

2. The process according to claim 1, wherein the aqueous composition is alkaline process wastewater from the nitration of aromatic compounds.

3. The process according to either of claims 1 and 2, wherein the aromatic nitro compounds are at least one compound selected from the group consisting of nitrobenzene (NB), dinitrobenzene (DNB), trinitrobenzene (TNB), mononitrotoluene (MNT), dinitrotoluene (DNT), trinitrotoluene (TNT), nitrochlorobenzene (NCB), mononitroxylenes, dinitroxylenes, trinitroxylenes, mononitrocresol, dinitrocresol, trinitrocresol, mononitrophenol, dinitrophenol, trinitrophenol, mononitrobenzoic acid, dinitrobenzoic acid, trinitrobenzoic acid, mononitroxylenols, dinitroxylenols and trinitroxylenols, with all isomeric forms of the compounds mentioned being encompassed.

4. The process according to any of claims 1 to 3, wherein the aqueous composition comprises at least one aromatic nitro compound in suspended form.

5. The process according to any of claims 1 to 4, wherein the aqueous composition comprising at least one aromatic nitro compound additionally comprises a redox mediator.

6. The process according to any of claims 1 to 5, wherein the temperature of the aqueous composition in the anode space in the electrolysis is in the range from 30 to 90°C.

7. The process according to any of claims 1 to 6, wherein the electrolysis cell has an anode which comprises at least one anode segment consisting of platinum, wherein the anode segment is in the form of foils, sheet or woven wire mesh and is fastened to a base frame comprising at least one metal selected from among niobium (Nb), tantalum (Ta), titanium (Ti) and hafnium (Hf), and the anode segment covers the surface of the base frame to an extent of not more than 30%.

8. The process according to any of claims 1 to 7, wherein the electrolysis cell has an anode comprising at least one anode segment comprising a support material and a coating, where the support material comprises at least one metal selected from the group consisting of niobium (Nb), tantalum (Ta), titanium (Ti) and hafnium (Hf); the coating comprises boron-doped diamond; the anode segment is fastened to a base frame comprising at least one metal selected from among niobium (Nb), tantalum (Ta), titanium (Ti) and hafnium (Hf) and the electrolysis is carried out an anodic current density in the range from 0.75 kA/m² to 1.25 kA/m² and a cell potential in the range from 4 to 15 V and the coating of boron-doped diamond on the support material has a layer thickness in the range from 5 to 50 µm.

9. An apparatus for the electrochemical treatment of aromatic nitro compounds, which comprises at least one electrolysis cell,
wherein the electrolysis cell has at least one anode space and at least one cathode space which are separated from one another by a separator,
and the electrolysis cell has at least one anode which comprises at least one anode segment comprising platinum or an anode segment comprising a support material and a coating, where the support material comprises at least one metal selected from the group consisting of niobium (Nb), tantalum (Ta), titanium (Ti) and hafnium (Hf), the coating comprises boron-doped diamond and the electrolysis cell has a spacer between the separator and the anode, where the spacing between anode and cathode is in the range from 4 to 8 mm;
and the separator is an anion-exchange membrane.

10. The apparatus according to claim 9, wherein the spacer between anode and cathode is a multilayer woven mesh composed of nonconductive polymer, with the various layers having a gradated aperture.

11. The use of an apparatus according to either of claims 9 and 10 for treating wastewater or process water from the nitration of aromatic compounds.

## Revendications

1. Procédé de traitement électrochimique de composés nitro aromatiques, comprenant les étapes :
a) l'introduction d'une composition aqueuse, contenant au moins un composé nitro aromatique, dans la chambre d'anode d'une cellule d'électrolyse,
b) la réalisation d'une électrolyse,
la cellule d'électrolyse comprenant au moins une chambre d'anode et au moins une chambre de cathode, qui sont séparées l'une de l'autre par un séparateur,
et la cellule d'électrolyse comprenant au moins une anode, qui comprend au moins
un segment d'anode contenant du platine, l'électrolyse étant réalisée à une densité de courant anodique dans la plage allant de 2,5 à 10 kA/m² et à une tension de la cellule dans la plage allant de 4 à 15 V ;
ou un segment d'anode constitué par un matériau support et un revêtement,
le matériau support étant constitué par au moins un métal choisi dans le groupe constitué par le niobium (Nb), le tantale (Ta), le titane (Ti) et l'hafnium (Hf), et le revêtement étant constitué par du diamant dopé avec du bore,
et l'électrolyse étant réalisée à une densité de courant anodique dans la plage allant de 0,75 à 1,25 kA/m² et à une tension de la cellule dans la plage allant de 4 à 15 V.

2. Procédé selon la revendication 1, **caractérisé en ce que** la composition aqueuse est une eau résiduaire de procédé alcaline issue de la nitration de composés aromatiques.

3. Procédé selon l'une quelconque des revendications 1 ou 2, **caractérisé en ce que** les composés nitro aromatiques sont au moins un composé choisi dans le groupe constitué par le nitrobenzène (NB), le dinitrobenzène (DNB), le trinitrobenzène (TNB), le mononitrotoluène (MNT), le dinitrotoluène (DNT), le trinitrotoluène (TNT), le nitrochlorobenzène (NCB), les mononitroxylènes, les dinitroxylènes, les trinitroxylènes, le mononitrocrésol, le dinitrocrésol, le trinitrocrésol, le mononitrophénol, le dinitrophénol, le trinitrophénol, l'acide mononitrobenzoïque, l'acide dinitrobenzoïque, l'acide trinitrobenzoïque, les mononitroxylénols, les dinitroxylénols et les trinitroxylénols, toutes les formes isomères des composés mentionnés étant comprises.

4. Procédé selon l'une quelconque des revendications 1 à 3, **caractérisé en ce que** la composition aqueuse contient au moins un composé nitro aromatique sous forme suspendue.

5. Procédé selon l'une quelconque des revendications 1 à 4, **caractérisé en ce que** la composition aqueuse contenant au moins un composé nitro aromatique contient en plus un médiateur redox.

6. Procédé selon l'une quelconque des revendications 1 à 5, **caractérisé en ce que** la température de la composition aqueuse dans la chambre d'anode lors de l'électrolyse est dans la plage allant de 30 à 90 °C.

7. Procédé selon l'une quelconque des revendications 1 à 6, **caractérisé en ce que** la cellule d'électrolyse comprend une anode, qui comprend au moins un segment d'anode constitué de platine, le segment d'anode se présentant sous la forme d'un film, d'une plaque ou d'une toile métallique et étant fixé sur un cadre de base constitué par au moins un métal choisi parmi le niobium (Nb), le tantale (Ta), le titane (Ti) et l'hafnium (Hf), et le segment d'anode ne recouvrant pas plus de 30 % de la surface du cadre de base.

8. Procédé selon l'une quelconque des revendications 1 à 7, **caractérisé en ce que** la cellule d'électrolyse comprend une anode, qui comprend au moins un segment d'anode constitué par un matériau support et un revêtement, le matériau support étant constitué par au moins un métal choisi dans le groupe constitué par le niobium (Nb), le tantale (Ta), le titane (Ti) et l'hafnium (Hf) ; le revêtement étant constitué par du diamant dopé avec du bore ; le segment d'anode étant fixé sur un cadre de base constitué d'au moins un métal choisi parmi le niobium (Nb), le tantale (Ta), le titane (Ti) et l'hafnium (Hf), et l'électrolyse étant réalisée à une densité de courant anodique dans la plage allant de 0,75 à 1,25 kA/m² et à une tension de la cellule dans la plage allant de 4 à 15 V, et le revêtement de diamant dopé avec du bore sur le matériau support présentant une épaisseur de couche dans la plage allant de 5 à 50 µm.

9. Dispositif pour le traitement électrochimique de composés nitro aromatiques, comprenant au moins une cellule d'électrolyse,
la cellule d'électrolyse comprenant au moins une chambre d'anode et au moins une chambre de cathode, qui sont séparées l'une de l'autre par un séparateur,
et la cellule d'électrolyse comprenant au moins une anode, qui comprend au moins un segment d'anode contenant du platine ou un segment d'anode constitué par un matériau support et un revêtement, le matériau support contenant au moins un métal choisi dans le groupe constitué par le niobium (Nb), le tantale (Ta), le titane (Ti) et l'hafnium (Hf), le revêtement étant constitué par du diamant dopé avec du bore, et la cellule d'électrolyse comprenant un espaceur entre le séparateur et l'anode, la distance entre l'anode et la cathode étant dans la plage allant de 4 à 8 mm ;
et le séparateur étant une membrane d'échange d'anions.

10. Dispositif selon la revendication 9, **caractérisé en ce que** l'espaceur entre l'anode et la cathode est un tissu multicouche en plastique non conducteur, les différentes couches comprenant une ouverture décalée.

11. Utilisation d'un dispositif selon l'une quelconque des revendications 9 ou 10 pour le conditionnement d'eaux résiduaires ou d'eaux de procédé issues de la nitration de composés aromatiques.
